# EUROPÄISCHE PATENTSCHRIFT

(11) **EP 3 839 287 B1**
(45) Veröffentlichungstag und Bekanntmachung des Hinweises auf die Patenterteilung: **12.01.2022**
(21) Anmeldenummer: 19218795.3
(22) Anmeldetag: 20.12.2019
(51) Int. Cl.: F16G 1/00

(54) **RIEMEN ALS ENDLOSES ZUGMITTEL FÜR FÖRDERBÄNDER VON BALLENPRESSEN ODER BALLENWICKLERN**
BELT AS ENDLESS TRACTION MEANS FOR CONVEYOR BELTS OF BALE PRESSES OR BALE WINDERS
COURROIE COMME MOYEN DE TRACTION SANS FIN POUR BANDES TRANSPORTEUSES DES PRESSE À BALLES OU D'ENROULEUSES DE BALLES

(43) Veröffentlichungstag der Anmeldung: 23.06.2021
(73) Patentinhaber: Arnold Jäger Holding GmbH, 30625 Hannover (DE)
(72) Erfinder: JÄGER, Sebastian, 30657 Hannover (DE)
(74) Vertreter: Bremer, Ulrich

(56) Entgegenhaltungen:
- EP-A1- 1 136 396
- EP-A1- 3 210 915
- EP-A2- 1 595 437
- DE-A1-102016 112 305
- DE-U1- 9 318 117
- US-A1- 2010 251 685

## Beschreibung

Die vorliegende Erfindung betrifft einen Riemen als endloses Zugmittel für Förderbänder von Ballenpressen oder Ballenwicklern, gemäß dem Oberbegriff des Anspruchs 1.

Ein derartiger Riemen ist in der DE 10 2004 023 705 B3 offenbart, die eine Maschine zum Aufnehmen und Pressen von landwirtschaftlichem Erntegut, z. B. Heu oder Stroh betrifft. Diese Maschine ist mit einem Ballenförderer ausgestattet, der zwei parallel zueinander beabstandeten Riemen aufweist, die durch voneinander parallel beabstandete Querstäbe miteinander verbunden sind. Die Riemen bestehen aus einem Kunststoffmaterial oder aus Gummi und sind durch mindestens eine Gewebelage verstärkt. Derartige Riemen weisen normalerweise ein Steifigkeits-Verhältnis zwischen einer Quersteifigkeit und einer Längssteifigkeit von 1,3:1 oder weniger auf.

In der US 2008/0153647 A1 ist ein endloser Riemen aus elastomerem Material beschrieben. Er kommt ebenfalls in Ballenpressen zum Einsatz und ist durch einen Wickel aus Stahlkord verstärkt, der in Längsrichtung des Riemens verläuft und in eine Gummi-Matrix eingebettet ist. Zusätzlich zu diesem Wickel ist eine weitere Stahlkordverstärkung vorgesehen, die quer zur Riemenlängsrichtung ausgerichtet ist. Damit ist die Biegesteifigkeit in beiden Richtungen in etwa identisch. Diese Riemen sind in der Ballenpresse mehrfach nebeneinander angeordnet und wirken direkt auf das zu Ballen zu formende Erntegut ein.

US 2010/251685 zeigt einen Riemen gemäß dem Oberbegriff des Anspruchs 1.

Nachteilig bei derartigen nebeneinanderlaufenden Riemen einer Ballenpresse ist, dass das Aufspannen der mehreren Riemen sehr aufwendig ist und die Riemen im Betrieb gegeneinanderschlagen können, wodurch der Betrieb gestört werden kann. Weiterhin tritt Materialverlust auf, da das zu pressende Stroh durch Schlitze zwischen den mehreren Riemen gelangen kann. Wird die Anzahl an nebeneinanderlaufenden Riemen verringert, beispielsweise auf zwei der drei Riemen, ist die Breite der Riemen entsprechend größer zu wählen, um dieselbe Fläche in der Ballenpresse abdecken zu können. Dabei kann es jedoch zu einem seitlichen Umschlagen der dann breiteren Riemen während des Betriebes kommen, beispielsweise aufgrund einer asymmetrischen Belastung oder aufgrund von ruckartig bzw. schlagartig induzierten Kräften, die von der Seite auf die stark gespannten Riemen wirken. Auch dadurch wird der laufende Betrieb gestört.

Die Riemen müssen für ihren Einsatz zudem in endloser Form vorliegen. Zur Herstellung einer derartigen endlosen Form sind aus dem Stand der Technik verschiedene Vorgehensweisen bekannt.

So ist es aus DE 100 37 645 A1 bekannt, die beiden Enden des Riemens kammerartig zu verzahnen und die Verzahnungsbereiche zum Endlosmachen des Riemens ineinanderzuschieben und nach zu vulkanisieren. Gemäß DE 3 808 711 A1 ist vorgesehen, dass an den beiden Riemenenden metallische Armaturen befestigt sind, die im Wesentlichen u-förmig gestaltet und wechselseitig an den Riemenenden angeordnet sind. Die Schenkel der Armaturen schließen die Riemenende mit Pressung zwischen sich ein und sind durch Niete, die die Riemenenden durchsetzen befestigt. Die die Schenkel verbindenden etwa halbkreisförmigen Stege der Armaturen liegen wechselseitig an einem Stab an, der sich über die gesamte Breite der Riemenenden erstreckt und nach der Montage des Bandes eingeführt ist und zum Zwecke der Demontage des Bandes herausgezogen werden muss. Der Stab besteht aus einem geeigneten Metall, er kann aber auch als starkes Drahtseil ausgebildet sein. Nachteilig hierbei ist, dass sich die Armaturen im Bereich der halbreisförmigen Stege durch Reibung mit dem Stab im Betrieb des Riemens mit der Zeit abnutzen und der Riemen daher getauscht werden muss.

In der EP 3 078 880 A1 erfolgt das Endlosmachen eines als Nockenriemen ausgeführten Zugmittels durch ein Riemenschloss. Derartige Riemenschlösser werden in verschiedenen Ausführungsformen häufig zum Endlosmachen von Zugmitteln für Förderbänder von landwirtschaftlichen Maschinen eingesetzt.

In der DE 10 2011 116 633 A1 ist weiterhin ein aus einem gewebelagenverstärkten Polymer hergestellter Flachriemen als Zugmittel bekannt. Das Endlosmachen dieses Riemens erfolgt dadurch, dass er an beiden Enden über die gesamte Breite mehrfach abgestuft ist. Dadurch ergibt sich ein Überlappungsbereich, in dem ein erster Endbereich des Riemens und ein zweiter Endbereich des Riemens überlappend aufeinander liegen. Der Riemen besitzt auf seiner Unterseite in gleichmäßigen Abständen angeordnete, sich quer zur Längsrichtung erstreckenden Nuten, die im Überlappungsbereich der Aufnahme von Ankerplatten dienen. Jede Ankerplatte weist zwei angeschweißte und voneinander beabstandete Schraubenbolzen auf. Bei aufeinandergelegten Riemenenden durchragen diese Schraubenbolzen in den Riemenenden vorgesehene, miteinander fluchtende Löcher. Auf die aus dem Riemen herausragenden Enden der Schraubenbolzen werden Muttern aufgedreht und fest angezogen, wodurch die Riemenenden zur Übertragung von Zugkräften fest aneinandergepresst werden.

In US 2010/0251685 A1 ist weiterhin ein Riemen als endloses Zugmittel für Förderbänder von Ballenpressen oder Ballenwicklern gezeigt, mit mindestens einer Gewebelage, die zumindest bereichsweise in eine Polymerschicht eingebettet ist, zum Ausbilden eines durch die mindestens eine Gebewebelage verstärkten endlosen Riemens. Weiterhin sind in dem Riemen transversale Chorde angeordnet, die den Riemen verstärken und die für einen Zusammenhalt der longitudinalen Chorde sorgen können.

Nachteilig bei diesen Riemenverbindungen ist, dass sie aufwendig auszubilden sind und im Betrieb störende Geräusche dadurch verursachen können, dass metallische Bestandteile im Bereich der Riemenverbindung auf andere Bauteile, z.B. Zahnräder oder Rollen oder dgl., aufschlagen.

Aufgabe der vorliegenden Erfindung ist daher, einen gattungsgemäßen Riemen zur Verfügung zu stellen, der eine große Zugfestigkeit aufweist und mit dem ein dauerhafter bzw. ungestörter Betrieb gewährleistet werden kann.

Diese Aufgabe wird erfindungsgemäß mit einem Riemen gelöst, der die Merkmale des Anspruchs 1 aufweist. Die Unteransprüche beschreiben bevorzugte Weiterbildungen.

Ein erfindungsgemäßer Riemen als endloses Zugmittel für Förderbänder von Ballenpressen wird demnach dadurch weitergebildet, dass in die Polymerschicht querversteifende Elemente eingebettet sind zum Erhöhen einer Quersteifigkeit des Riemens, wobei die querversteifenden Elemente im Wesentlichen in eine Querrichtung des Riemens ausgerichtet sind und der Riemen zumindest im Bereich der querversteifenden Elemente ein Steifigkeits-Verhältnis zwischen der Quersteifigkeit und einer Längssteifigkeit von mindestens 2:1 aufweist.

Dabei wird erfindungsgemäß die Biegesteifigkeit des Riemens sowohl in Längsrichtung als auch in Querrichtung betrachtet und diese ins Verhältnis zueinander gesetzt. Eine Messung der Biegesteifigkeit des Riemens im Bereich der querversteifenden Elemente kann beispielsweise in einem 3-Punkt Biegeversuch erfolgen, z.B. nach DIN EN ISO 178, oder auch in einem 4-Punkt Biegeversuch oder dergleichen. Darüber kann durch entsprechende Wahl des Materials und/oder der Dimensionen der querversteifenden Elemente und/oder deren Anordnung im Riemen, das erfindungsgemäße Steifigkeits-Verhältnis von größer gleich 2:1 (mit gleicher Wirkung auch noch bei ∼1,8:1), vorzugsweise größer gleich 3:1, insbesondere größer gleich 5:1 erreicht werden. Durch diese Steifigkeits-Verhältnisse lässt sich ein Umklappen bzw. Umbiegen des stark gespannten Riemens im Betrieb der Ballenpresse bereits verhindern, wobei dies noch weiter verbessert wird, wenn Steifigkeits-Verhältnisse von größer als 5:1, vorzugsweise größer als 10:1 eingestellt werden. Derartige Steifigkeits-Verhältnisse können beispielsweise mit querversteifenden Elementen erreicht werden, die ein Elastizitätsmodul von mindestens 25kN/mm², vorzugsweise mindestens 35 kN/mm², insbesondere mehr als 50kN/mm² aufweisen.

Der gattungsgemäße Riemen mit mindestens einer Gewebelage, die zumindest bereichsweise in eine Polymerschicht eingebettet ist, zum Ausbilden eines durch die mindestens eine Gebewebelage verstärkten endlosen Riemens, wird also vorteilhafterweise in Querrichtung in seiner Biegesteifigkeit verstärkt, ohne dabei die Flexibilität des Riemens in Längsrichtung (Längs(biege)steifigkeit) maßgeblich zu verändern. Dadurch kann ein Umklappen bzw. Umbiegen des stark gespannten Riemens im Betrieb der Ballenpresse verhindert werden, da auftretende Querkräfte auf den Riemen durch die querversteifenden Elemente effektiv abgefangen werden können. Die querversteifenden Elemente sind dazu bevorzugt über den gesamten Umfang des Riemens verteilt. Die querversteifenden Elemente können dabei auch in der Gewebelage angeordnet bzw. Bestandteil der Gewebelage sein, die ebenfalls in der Polymerschicht eingebettet ist.

Da die Längssteifigkeit bzw. die Flexibilität in Längsrichtung durch die querversteifenden Elemente nicht maßgeblich verändert wird, kann außerdem sichergestellt werden, dass der Riemen auf den Umlenk- oder Antriebsrollen einer Ballenpresse zuverlässig aufliegt und daher ohne maßgebliche Beeinträchtigungen angetrieben und geführt werden kann, um das Stroh zu Ballen zu pressen. Dies lässt sich auch bei Riemen mit einem Steifigkeits-Verhältnis von mehr als 10:1 noch erreichen. Dadurch können mit derartigen querversteifenden Elementen breitere Riemen für Ballenpressen gefertigt werden, bei gleichzeitig gleichbleibender Zuverlässigkeit im Betrieb. Dadurch kann die Anzahl an Riemen in einer Ballenpresse verringert werden, wodurch sich der Montage-Aufwand verringert.

Daher kann der laufende Betrieb der Ballenpresse insgesamt optimiert werden, wobei derartige Probleme mit dem Umklappen bzw. Umbiegen in Querrichtung bei herkömmlichen Riemen insbesondere aufgrund der hohen Belastungen in einer Ballenpresse auftreten. Dabei kann es zu ruckartigen temporären Krafteinwirkungen von der Seite kommen, die aufgrund der starken Spannung sowie der Geschwindigkeit der Riemen zu einem Umklappen führen können. Dies wird durch die erfindungsgemäßen querversteifenden Elemente, die in der Polymerschicht eingebettet sind, vermieden.

Vorzugsweise ist außerdem vorgesehen, dass die querversteifenden Elemente in Längsrichtung vollumlaufend bzw. kontinuierlich oder abschnittsweise in einem Element-Abstand zueinander oder unmittelbar aneinanderliegend in der Polymerschicht eingebettet sind, so dass die Quersteifigkeit des Riemens kontinuierlich über den gesamten Riemen oder abschnittsweise erhöht ist. Demnach verlaufen die querversteifenden Elemente nicht zwangsläufig vollflächig, sondern sind beabstandet zueinander oder liegen sich berührend aneinander, wobei entweder eine über den gesamten Umfang kontinuierliche Anordnung oder eine abschnittsweise Anordnung vorgesehen sein kann. Grundsätzlich kann aber auch über den gesamten Umfang oder abschnittsweise eine ausgedehnte flächige (anisotrope) Schicht vorgesehen sein, mit der sich das erfindungsgemäße Steifigkeits-Verhältnis einstellen lässt.

Dadurch wird erreicht, dass die querversteifenden Elemente ein Verbiegen des Riemens in Längsrichtung, insbesondere ein Aufliegen auf in Längsrichtung gewölbten Oberflächen, nicht wesentlich beeinflussen. Der Riemen kann also weiterhin flächig über Rollen der Ballenpresse, die der Umlenkung des Riemens sowie dem Antreiben des Riemens dienen, geführt werden. Der Betrieb der Ballenpresse wird also dahingehend nicht eingeschränkt.

Vorzugsweise ist vorgesehen, dass die querversteifenden Elemente innerhalb mehrerer Abschnitte in dem Element-Abstand zueinander in der Polymerschicht angeordnet sind. Ein Abschnitt kann dabei beispielsweise eine Abschnitts-Breite von zwischen 50mm und 100mm, vorzugsweise 75mm, aufweisen und benachbarte Abschnitte sind in einem Abschnitts-Abstand von zwischen 200mm und 300mm, vorzugsweise 250mm, zueinander angeordnet, wobei zwischen den Abschnitten keine querversteifenden Elemente in der Polymerschicht angeordnet sind. Verallgemeinert kann dabei vorgesehen sein, dass die Abschnitts-Breite und der Abschnitts-Abstand in einem Verhältnis von zwischen 1:6 und 1:2, vorzugsweise 1:3, zueinander liegen.

Dadurch können vorteilhafterweise Material und Gewicht gespart werden, da die querversteifenden Elemente nicht durchgängig bzw. vollumlaufend in der Polymerschicht eingebettet sind. Dabei wurde erkannt, dass eine Querversteifung nicht über die gesamte Länge des Riemens nötig ist, da ein Umklappen bzw. Umbiegen im Betrieb lediglich über größere Bereiche auftritt. Die mehreren voneinander beabstandeten Abschnitte reichen demnach aus, um querversteifende Bereiche auszubilden, zwischen denen ein Umklappen im Betrieb aufgrund der geringen Ausdehnung normalerweise nicht stattfindet. Daher können diese Bereiche dazwischen von den querversteifenden Elementen ausgespart bleiben.

Vorzugsweise ist weiterhin vorgesehen, dass die querversteifenden Elemente
- in die Querrichtung ausgerichtete Bänder sind, wobei die Bänder eine Element-Breite von zwischen 10mm und 30mm, vorzugsweise 20mm, aufweisen und in einem Element-Abstand von zwischen 250mm und 350mm, insbesondere 300mm, zueinander angeordnet sind, und/oder
- in die Querrichtung ausgerichtete Corde sind, wobei die Corde einen Durchmesser von zwischen 0,2mm und 2,5mm, vorzugsweise 1mm, aufweisen und die Corde aneinanderliegen oder voneinander beabstandet sind. Verallgemeinert kann dabei vorgesehen sein, dass die Element-Breite und der Element-Abstand im Falle von Bändern in einem Verhältnis von zwischen 1:12 und 1:35, vorzugsweise 1:15, zueinander liegen.

Dadurch können querversteifende Elemente bereitgestellt werden, die in einfacher und zuverlässiger Weise in die Polymerschicht eingebettet werden können und mit denen die geforderten Steifigkeits-Verhältnisse in einfacher Weise erreicht werden können. Diese querversteifenden Elemente, d.h. sowohl die Bänder als auch die Corde, können beispielsweise aus Metall, z.B. Federstahl, oder aus faserverstärktem Kunststoff, z.B. mit Fasern aus Glas oder Kohle oder Aramid, oder aus textilen Fäden mit geringer Dehnung oder aus monofilen thermoplastischen Fäden gefertigt sein.

Vorzugsweise kann dabei vorgesehen sein, dass die querversteifenden Elemente exakt in Querrichtung oder in einem Winkel zwischen +15° und - 15°, vorzugsweise zwischen +5° und -5°, zur Querrichtung in der Polymerschicht ausgerichtet sind. Die querversteifenden Elemente können dabei geradlinig oder mit gleicher oder vergleichbarer Wirkung auch geschwungen und entsprechend in Querrichtung ausgerichtet sein, um das erfindungsgemäße Steifigkeits-Verhältnis von mindestens 2:1 zu erreichen. Demnach ist nicht zwingend eine exakte Ausrichtung in Querrichtung nötig, insofern eine Umlenkung des Riemens um die Rollen der Ballenpresse noch sichergestellt werden kann, beispielsweise bei großen Durchmessern, bzw. das erfindungsgemäße Steifigkeits-Verhältnis von größer gleich 2:1 noch eingehalten ist.

Vorzugsweise ist weiterhin vorgesehen, dass zwischen den querversteifenden Elementen und Seitenrändern des Riemens ein Rand-Abstand von zwischen 2mm und 50mm vorgesehen ist. Dadurch kann bei einem Abnutzen des Riemens in den Randbereichen, z.B. bei einem Ausfransen, vermieden werden, dass die querversteifenden Elemente hervortreten und benachbarte Elemente oder Personal beschädigen bzw. verletzen können.

Vorzugsweise ist weiterhin vorgesehen, dass die querversteifenden Elemente in Teilbereichen des Riemens ausgespart sind, beispielsweise in einem mittleren Teilbereich des Riemens. Vorteilhafterweise kann dadurch Gewicht gespart werden, wenn Teilbereiche des Riemens ohne querversteifende Elemente ausgeführt werden, wobei die ausgesparten Teilbereiche vorzugsweise derartig gewählt sind, dass ein Umklappen in diesen Teilbereichen nicht wahrscheinlich ist. Beispielsweise wird ein Umklappen in Querrichtung um den mittleren Teilbereich (um die Mittelachse) des Riemens aufgrund der Spannung des Riemens mit hoher Wahrscheinlichkeit nicht eintreten, so dass dieser Bereich ausgespart werden kann.

Vorzugsweise ist weiterhin vorgesehen, dass Endbereiche des Riemens miteinander verbunden sind zum Ausbilden eines endlosen Riemens, wobei die Endbereiche des Riemens dazu in einem Überlappungsbereich flächig übereinanderliegen und zumindest bereichsweise in dem Überlappungsbereich zusammengefügt sind, oder die Endbereiche durch ein Riemenschloss zusammengehalten sind. Es kann aber auch ein bereits endlos gefertigter Riemen ohne Fügestellen und demnach ohne Endbereiche verwendet werden, in den die querversteifenden Elemente eingebettet sind.

Demnach sind unterschiedliche Möglichkeiten vorgesehen, um die Riemenenden sicher miteinander zu verbinden bzw. einen endlosen Riemen bereitzustellen. Dabei können die querversteifenden Elemente je nach Ausführung der Verbindungsstelle auch zu einer verbesserten Zugfestigkeit beitragen. Andererseits kann auch vorgesehen sein, dass die querversteifenden Elemente in den Endbereichen ausgespart sind, um den Verbindungsvorgang nicht zu behindern oder zu stören.

Vorzugsweise ist vorgesehen, dass die Endbereiche, insofern vorhanden, durch mindestens einen eine Naht ausbildenden Faden miteinander verbunden sind, wobei der mindestens eine Faden die Endbereiche des Riemens dazu in einem Nahtbereich in mehreren Stichen durchdringt, wobei die mindestens eine Gebewebelage des Riemens zumindest über diesen Nahtbereich in die Polymerschicht eingebettet ist, und der Faden in Übergangsbereichen zwischen den Stichen in die Polymerschicht derartig oberflächlich in einer Eindringtiefe eingebettet ist, dass der Faden vollständig oder zumindest teilweise bzw. größtenteils unterhalb von Oberflächen des Riemens verläuft bzw. nicht darüber hinaus aus dem Riemen ragt.

Es ist seit langem bekannt, Riemen aus vorzugsweise vernetztem Polymer, insbesondere Gummi, mit eingebetteten Gewebelagen in den Endbereichen miteinander zu verbinden, um einen endlosen Riemen zu erhalten. Diese Verbindung über einen zusätzlichen Faden bzw. eine Naht herzustellen, ist aufgrund der hohen Belastungen im Betrieb des Riemens, z.B. an einem Förderband landwirtschaftlicher Maschinen, bisher nicht umgesetzt worden. Der eingenähte Faden ragt nämlich bei einer solchen Vernähung herkömmlicherweise über die Oberfläche des Riemens aus dem polymeren Obermaterial hinaus, so dass der Faden durch die hohen auftretenden Kräfte insbesondere im Überlappungsbereich bzw. Nahtbereich stark beeinträchtigt wird, wodurch sich die Riemenverbindung nach kurzer Zeit wieder öffnet.

Aufgrund der Ausbildung der Naht tritt dieses Problem nicht mehr oder erst sehr viel später auf, da der die Endbereiche miteinander verbindende Faden vorzugsweise vollständig in das polymere Obermaterial des Riemens, z.B. in die Gummischicht, eingebettet ist. Demnach liegt der Riemen lediglich mit seiner Oberfläche auf z.B. Umlenkrollen oder Antriebsrollen oder bei einer Ballenpresse auf dem geförderten Erntegut auf, so dass eine Wechselwirkung zwischen diesen bzw. diesem und dem Faden vorteilhafterweise vermieden werden kann, da der Faden durch das polymere Obermaterial, in das er eingebettet ist, geschützt ist. Auf die Oberfläche des Riemens wirkende Kräfte pflanzen sich somit, wenn überhaupt, nur sehr geringfügig auf den Faden fort, so dass der Faden selbst in seiner Funktion, dem Zusammenhalten der Endbereiche des Riemens und der Aufnahme von Zugbelastungen, nicht oder erst nach sehr langer Zeit beeinträchtigt wird. Die Dauerhaltbarkeit eines solchen endlosen Riemens wird dadurch stark verbessert.

Vorzugsweise ist weiterhin vorgesehen, dass ein Großteil der Übergangsbereiche zwischen den Stichen eine Richtungs-Komponente aufweist, die parallel zu einer Längsrichtung des Riemens ausgerichtet ist und/oder zusätzlich mindestens eine Haltenaht vorgesehen ist, die im Nahtbereich im Wesentlichen quer zu einer Längsrichtung des Riemens verläuft, wobei die Hauptrichtungskomponente der mindestens einen Haltenaht vorzugsweise in einem Winkel von mehr als 45° zur Längsrichtung des Riemens, vorzugsweise in etwa 60° zur Längsrichtung des Riemens, verläuft..

Durch die Ausrichtung in Längsrichtung des Riemens kann erreicht werden, dass eine Zugbelastung auf den Riemen durch den Faden effizient abgeleitet werden kann. Die Zugbelastung und ggf. weitere Kräfte werden von dem Faden vorzugsweise in die Gewebelage abgeführt, die durch die Stiche in mehreren Kreuzungspunkten von dem Faden durchstoßen wird. Dadurch kann eine besonders hohe Zugfestigkeit des endlos verbundenen Riemens mit einer hohen Haltbarkeit der Riemenverbindung gewährleistet werden.

Die Haltenaht dient vorteilhafterweise dazu, die Riemenenden an die Oberfläche des Riemens zu drücken, um ein Umknicken der Endbereiche ausgehend von den Riemenenden zu unterdrücken. Dadurch kann sich ein dauerhaft konstanter Lauf des Riemens einstellen und ein Aufreißen der Riemenverbindung durch ein Umknicken der Endbereiche kann vermieden bzw. hinausgezögert werden.

Dies kann ergänzend oder alternativ auch dadurch erreicht werden, dass der Nahtbereich über den Überlappungsbereich zumindest einseitig hinausgeht, so dass auch Stiche und Übergangsbereiche des Fadens außerhalb des Überlappungsbereiches angeordnet sind zum Andrücken von Riemenenden des Riemens an die Oberfläche des Riemens. Somit ist die Naht lediglich über den Überlappungsbereich hinweg zu führen, was das Andrücken der Riemenenden vereinfacht, da keine weitere Naht nötig ist.

Die Erfindung wird nachstehend anhand eines Ausführungsbeispiels näher erläutert. In der dazu gehörigen Zeichnung zeigt:
- Fig. 1a: einen Längsschnitt durch einen erfindungsgemäßen Riemen;
- Fig. 1b: eine Draufsicht auf den erfindungsgemäßen Riemen gemäß Fig. 1;
- Fig. 2a, 2b, 2c: Detailansichten des erfindungsgemäßen Riemens in unterschiedlichen Ausführungen;
- Fig. 3: eine weitere Ausführung des erfindungsgemäßen Riemens;
- Fig. 4: eine Detailansicht mit einer Nähverbindung des Riemens gemäß Fig. 1; und
- Fig. 5: eine Detailansicht der verwendeten Gewebelage.

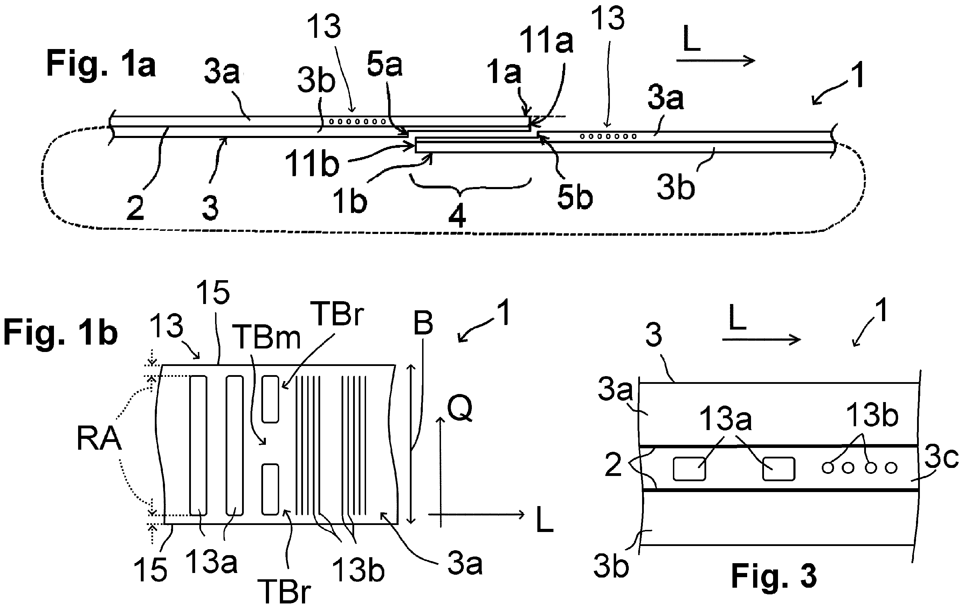

Der in Fig. 1a in einer Schnittansicht dargestellte Riemen 1 kann als Zugmittel für Förderbänder in einer Ballenformeinrichtung einer Ballenpresse oder in Ballenwicklern eingesetzt werden und läuft dabei in dieser auf mehreren Umlenkrollen und einer Antriebsrolle um (nicht dargestellt). Der Riemen 1 ist dazu in seinen Endbereichen 1a, 1b zusammengefügt, um einen endlosen Riemen 1 auszubilden, der z.B. auf die Rollen einer Fördereinrichtung einer landwirtschaftlichen Maschine aufgespannt werden kann. Der Riemen 1 besteht zumindest bereichsweise aus einem gewebelagenverstärkten, vernetzten Polymer und besitzt demnach mindestens eine verstärkende Gewebelage 2, die zumindest bereichsweise in eine Polymerschicht 3, insbesondere Gummischicht, eingebettet ist. Damit ist die Gewebelage 2 zumindest bereichsweise von oben und unten von der Polymerschicht 3 als polymeres Obermaterial bedeckt. Unter Umständen können als polymeres Obermaterial auch andere oder zusätzliche polymere Schichten und/oder polymere Beschichtungen vorgesehen sein.

Gemäß Fig. 1a sowie der Draufsicht in Fig. 1b ist weiterhin vorgesehen, dass in einer außen liegenden Decklage 3a der Polymerschicht 3, d.h. dem Teil der Polymerschicht 3, der in Fig. 1a oberhalb der Gewebelage 2 des Riemens 1 liegt, mehrere querversteifende Elemente 13 vorgesehen sind. Diese sind, wie in Fig. 1b dargestellt, in eine Querrichtung Q des Riemens 1 ausgerichtet. Die querversteifenden Elemente 13 sind beispielsweise dadurch gekennzeichnet, dass Sie ein Elastizitätsmodul E von > 25kN/mm², vorzugsweise > 35kN/mm², insbesondere > 50kN/mm² aufweisen, wodurch eine hohe Biegesteifigkeit in Querrichtung Q (Quersteifigkeit QS) gegeben ist. Die querversteifenden Elemente 13 sind dazu beispielsweise aus Metall, z.B. Federstahl, oder aus faserverstärktem Kunststoff, z.B. mit Fasern aus Glas oder Kohle oder Aramid, oder als textile Fäden mit geringer Dehnung oder als monofile thermoplastische Fäden gefertigt.

Der Riemen 1 wird dadurch in Querrichtung Q zusätzlich (biege)versteift, d.h. eine elastische Deformation bzw. ein Umbiegen in die Querrichtung Q wird erschwert, wodurch ein Umklappen bzw. Umbiegen des Riemens 1 um eine parallel zu einer Längsrichtung L des Riemens 1 verlaufenden Achse vermieden werden kann bzw. erst bei sehr hohen Querkräften auftritt. Bei einem besonders breiten Riemen 1 wird dadurch verhindert, dass dieser während des normalen Betriebes in einer Ballenpresse vom Rand in Richtung zur Riemenmitte umklappt und der Betrieb dadurch zu unterbrechen ist, um den Riemen 1 wieder zurückzuklappen.

Da die querversteifenden Elemente 13 im Wesentlichen in Querrichtung Q ausgerichtet sind, wird eine Versteifung lediglich in dieser Richtung und nicht in die Längsrichtung L bewirkt. Dadurch wird der Betrieb nicht weiter gestört, da ein Umlenken des Riemens 1 über die Umlenkrollen bzw. die Antriebsrolle nicht beeinträchtigt wird. Dies wird dadurch unterstützt, dass die querversteifenden Elemente 13 in Längsrichtung L vorzugsweise nicht durchgängig verlaufen.

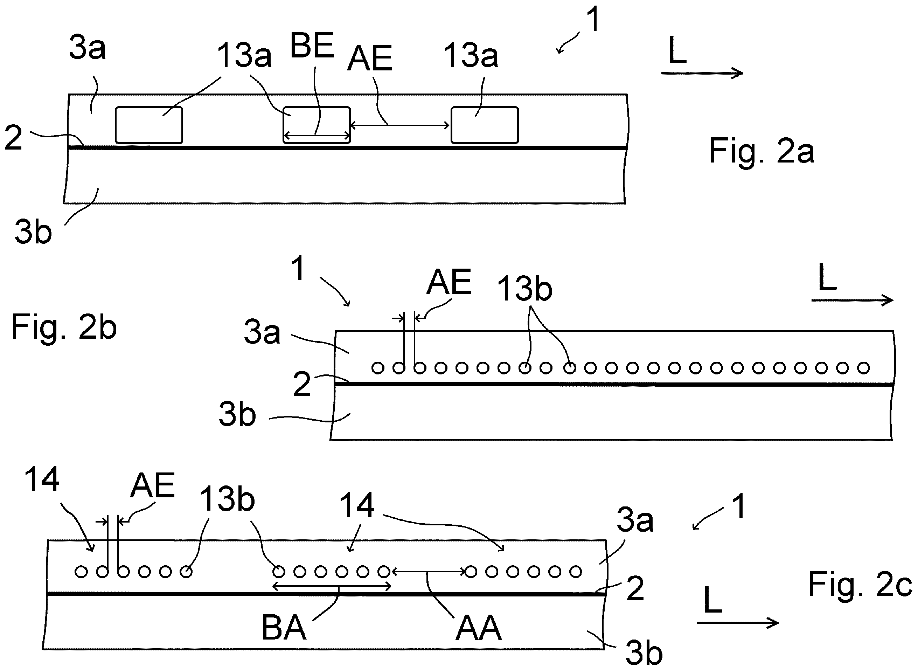

Dazu ist gemäß der nicht maßstabsgetreuen Detailansicht in Fig. 2a beispielsweise vorgesehen, dass die querversteifenden Elemente 13 durch in Längsrichtung L beabstandete Bänder 13a, beispielsweise Stahlbänder, oder gemäß der nicht maßstabsgetreuen Detailansicht in Fig. 2b und 2c durch in Längsrichtung L beabstandete Corde 13b, beispielsweise Stahlcorde, ausgebildet sind. Die querversteifenden Elemente 13 sind also in Längsrichtung L des Riemens 1 vollumlaufend bzw. kontinuierlich oder abschnittsweise in einem gleichmäßigen Element-Abstand AE zueinander angeordnet. Die Bänder 13a können bei einer Element-Breite BE von beispielsweise zwischen 10mm und 30mm, vorzugsweise 20mm, in einem Element-Abstand AE von zwischen 250mm und 350mm, insbesondere 300mm, angeordnet sein. Die Corde 13b hingegen können bei einem Durchmesser von beispielsweise zwischen 0,2mm und 2,5mm, vorzugsweise 1mm, entweder aneinanderliegend oder voneinander beabstandet sein.

Gemäß Fig. 2c können die Corde 13b zudem in festgelegten Abschnitten 14 zusammengefasst sein, wobei die Abschnitte 14 in Abschnitts-Abständen AA zueinander gleichmäßig und vollumfänglich auf dem Riemen 1 verteilt sind. Die Abschnitts-Abstände AA können beispielsweise zwischen 200mm und 300mm, vorzugsweise 250mm, betragen. Ein Abschnitt 14 kann eine Abschnitts-Breite BA von zwischen 50mm und 100mm, vorzugsweise 75mm, aufweisen.

Durch eine derartige Anordnung wird die Biegefähigkeit des Riemens 1 bzw. dessen Flexibilität in Längsrichtung L nicht maßgeblich beeinträchtigt, so dass der Riemen 1 beim Umlenken weiterhin auf den Umlenkrollen und der Antriebsrolle flächig aufliegen kann und die Laufeigenschaften und Antriebseigenschaften des Riemens 1 daher nicht maßgeblich beeinträchtigt werden. Um dies sicherzustellen, sind die querversteifenden Elemente 13 derartig ausgebildet und im Riemen 1 angeordnet, dass ein Steifigkeits-Verhältnis QS/LS zwischen der Quer(biege)steifigkeit QS des Riemens 1 und einer Längs(biege)steifigkeit LS mindestens 2:1, vorzugsweise mindestens 3:1, insbesondere mindestens 5:1 vorliegt. Es kann aber auch ein Steifigkeits-Verhältnis QS/LS von mindestens 10:1 vorliegen.

Wie in Fig. 1b schematisch dargestellt, enden die querversteifenden Elemente 13 beidseitig in einem Rand-Abstand AR vor Seitenrändern 15 des Riemens 1, wobei der Rand-Abstand AR beispielsweise zwischen 2mm und 50mm beträgt. Dies dient dazu, dass die querversteifenden Elemente 13 bei einer randseitigen Abnutzung des Riemens 1 bzw. bei einem Ausfransen nicht aus dem Riemen 1 randseitig hervortreten und dadurch Beschädigungen anderer Bauteile oder Verletzungen von Personal vermieden werden kann.

Ergänzend kann vorgesehen sein, dass die querversteifenden Elemente 13 in Teilbereichen TB, insbesondere in einem mittleren Teilbereich TBm, wie in Fig. 1b beispielhaft dargestellt, ausgespart sind. Die querversteifenden Elemente 13 verlaufen also nicht über die gesamte Riemen-Breite B - abzüglich des Rand-Abstandes AR - des Riemens 1. Dadurch kann Material und Gewicht gespart werden. Dabei wird auch berücksichtigt, dass ein Umklappen des Riemens 1 um eine in Längsrichtung L verlaufende Achse bei einem breiten Riemen 1 nur in randseitigen Teilbereichen TBr des Riemens 1 erfolgt.

Statt einer Anordnung der querversteifenden Elemente 13 in der außen liegenden Decklage 3a der Polymerschicht 3, wie in den Figuren 1a, 1b, 2a, 2b, 2c dargestellt, können diese auch in einer innen liegenden Decklage 3b in gleicher Weise angeordnet sein (nicht dargestellt). Daraus ergeben sich dieselben Vorteile wie bereits beschrieben.

Weiterhin ist, wie in Fig. 3 dargestellt, auch ein Riemen 1 mit zwei Gewebelagen 2 möglich, die beabstandet zueinander in eine Polymerschicht 3 eingebettet sind, wobei die Polymerschicht 3 aus einer außen liegenden und einer innen liegenden Decklage 3a, 3b sowie einer Zwischenlage 3c besteht. Die querversteifenden Elemente 13 können dann zwischen den beiden Gewebelagen 2 in der Zwischenlage 3c, wie beschrieben, als in die Querrichtung Q ausgerichtete Bänder 13a (vgl. Fig. 2a) und/oder Corde 13b (vgl. Fig. 2b, 2c) ausgeführt sein. Die Anordnung der querversteifenden Elemente 13 in Längsrichtung L kann identisch zu der beschriebenen Ausführung des Riemens 1 mit lediglich einer Gewebelage 2 gewählt werden. Grundsätzlich können die querversteifenden Elemente 13 in dieser Ausführung auch in einer der Decklagen 3a, 3b angeordnet sein. Weiterhin können grundsätzlich auch mehr als zwei Gewebelagen 2 mit entsprechenden Decklagen 3a, 3b und dann mehreren Zwischenlagen 3c vorgesehen sein.

Zum Ausbilden eines endlosen Riemens 1 mit derartigen querversteifenden Elementen 13 sind mehrere Möglichkeiten vorgesehen. So können Riemen 1, die die querversteifenden Elemente 13 in entsprechend beschriebener Form aufweisen, zunächst zugeschnitten werden und die Riemenenden 11a, 11b mit ihren Endbereichen 1a, 1b anschließend mit einem nachträglich montierten Riemenschloss fest und dauerhaft miteinander verbunden werden. Das Riemenschloss nimmt dabei die Endbereiche 1a, 1b auf und bildet damit ein dauerhaft schließendes Verbindungs- bzw. Übergangsstück, das auch Zugkräfte des Riemens 1 aufnehmen kann. Grundsätzlich ist auch die Bereitstellung eines bereits endlos gefertigten Riemens 1 möglich.

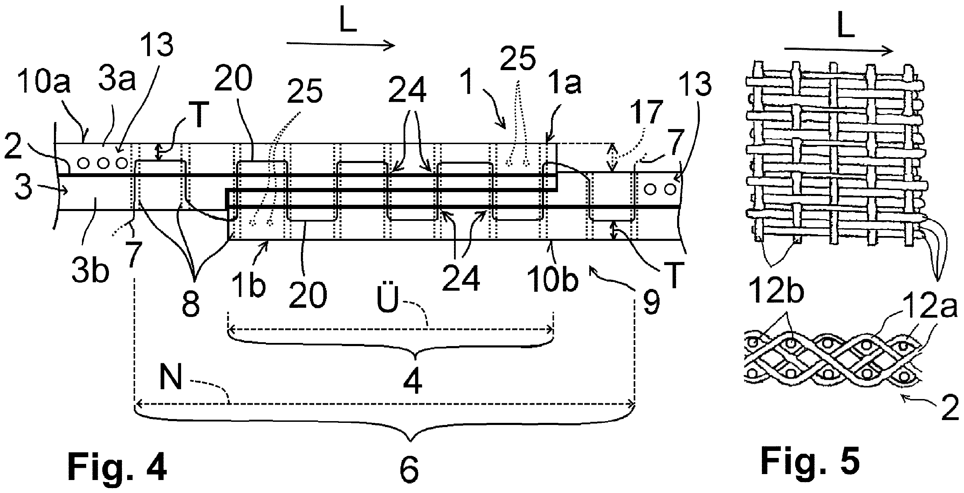

Weiterhin ist auch eine Verbindung möglich, bei der die beiden Endbereiche 1a, 1b direkt aneinandergefügt werden, beispielsweise durch Vernähen, Verkleben, Verschrauben, Vernieten, Vulkanisieren, etc. Dazu ist zunächst vorgesehen, die Endbereiche 1a, 1b des Riemens 1 in einem Überlappungsbereich 4 flächig übereinander zu legen. Gemäß Fig. 1a oder Fig. 4 sind die Endbereiche 1a, 1b dabei gegensätzlich abgestuft, wobei dazu die innen liegende Decklage 3b der Polymerschicht 3 an einem Endbereich 1a und die außen liegende Decklage 3a der Polymerschicht 3 an dem anderen Endbereich 1b unter Ausbildung jeweils einer Stufe 5a, 5b zumindest teilweise abgetragen wird. Durch diese Maßnahme kann ein Überstand 17 (s. Fig. 4) im Überlappungsbereich 4 verringert werden, was den Lauf des Riemens 1 sowie dessen Dauerhaltbarkeit verbessert. Grundsätzlich kann aber auch eine stufenlose Überlappung vorgesehen sein. Ergänzend kann das Ausbilden einer flächigen stoffschlüssigen Verbindung im Bereich der Stufen 5a, 5b zwischen den Endbereichen 1a, 1b über ein beliebiges Klebemittel oder eine zwischen den Endbereichen 1a, 1b angeordnete unvulkanisierte Polymerschicht, die nach dem Vernähen vernetzt wird, vorgesehen sein. Je nach Anwendung kann die zusätzliche zwischen den Endbereichen 1a, 1b angeordnete unvulkanisierte Polymerschicht auch unvernetzt bleiben.

Gemäß einer Ausführungsform, die in Fig. 4 dargestellt ist, werden die übereinandergelegten Endbereiche 1a, 1b des Riemens 1 anschließend in einem Nahtbereich 6 mit mindestens einem Faden 7 zusammengenäht, wobei der Faden 7 dazu insbesondere die beiden Endbereiche 1a, 1b in mehreren Stichen 8 durchdringt. Dadurch wird pro Faden 7 eine Naht 9 mit einer bestimmten Nahtform ausgebildet, wobei Fig. 4 eine beispielhafte Schnittansicht entlang einer solchen Naht 9 zeigt. Um einen derartig endlos verbundenen Riemen 1 dauerhaft unter einer hohen Zugbelastung betreiben zu können, wird der Faden 7 unter den folgenden Aspekten in den Nahtbereich 6 eingebracht:
Um im Betrieb des Riemens 1 zu verhindern, dass der Faden 7 durch eine dauerhafte Belastung, z.B. durch Andruck und/oder Reibung mit dem geförderten Erntegut sowie den Umlenkrollen bzw. der Antriebsrolle oder anderen anliegenden Komponenten (je nach Anwendung), abgenutzt wird und dadurch irgendwann reißt, ist der Faden 7 in Übergangsbereichen 20 zwischen den einzelnen Stichen 8 in die Polymerschicht 3 des jeweiligen Endbereiches 1a, 1b eingebettet, wie in Fig. 4 schematisch dargestellt.

Unter eingebettet ist dabei zu verstehen, dass der Faden 7 auch in den Übergangsbereichen 20 zwischen den Stichen 8 vorzugsweise vollständig unterhalb der Oberflächen 10a, 10b der Polymerschicht 3 liegt bzw. nicht darüber hinaus aus dem Riemen 1 ragt. Der Faden 7 dringt somit mit einer gewissen Eindringtiefe T in den Riemen 1 bzw. dessen Oberfläche 10a, 10b ein. Dadurch kann gewährleistet werden, dass der Riemen 1 hauptsächlich mit seinen Oberflächen 10a, 10b auf den Rollen bzw. dem Erntegut bzw. der entsprechenden anwendungsspezifischen Komponente anliegt und der eingebettete Faden 7 je nach Eindringtiefe T in der Polymerschicht 3 nicht oder zumindest weniger stark belastet und somit geschützt wird.

Damit die querversteifenden Elemente 13 dieses Einbetten des Fadens 7 nicht verhindern bzw. stören, kann vorgesehen sein, dass die querversteifenden Elemente 13 in der innen liegenden oder der außen liegenden Decklage 3a, 3b im Überlappungsbereich 4 oder im Nahtbereich 6 vollständig ausgespart sind. Liegen beispielsweise Stäbe 13a als querversteifende Elemente 13 vor, kann dadurch bereits der Nähvorgang selbst vereinfacht werden, da die Nähnadel die Stäbe 13a nicht durchdringen kann und die Naht 9 dadurch nicht im Bereich der Stäbe 13a verlaufen kann, sondern entsprechend benachbart dazu zu positionieren ist.

Bei den Corden 13b hingegen, wird die Nähnadel aufgrund des geringen Durchmessers der Corde 13b von diesen zur Seite hin abgelenkt, so dass die Naht 9 grundsätzlich auch über diesen oder im Bereich dieser positioniert werden kann. Um jedoch ein Einbetten des Fadens 7 zu ermöglichen, sind die Corde 13b zumindest im Nahtbereich 6 so tief in der jeweiligen Decklage 3a, 3b einzubetten, dass ein Abstand oberhalb der Corde 13b entsprechend der benötigten Eindringtiefe T zur jeweiligen Oberfläche 10a, 10b eingehalten ist. Andererseits können auch die Corde 13b im Überlappungsbereich 4 bzw. im Nahtbereich 6 komplett ausgespart sein.

Weist der Riemen 1 neben der Polymerschicht 3 oberflächlich weitere polymere Schichten und/oder polymere Beschichtungen auf, so ist der Faden 7 entsprechend in diese eingebettet, d.h. verläuft entsprechend in einer Eindringtiefe T unterhalb den Oberflächen dieser weiteren Schichten bzw. ragt nicht darüber aus dem Riemen 1 hinaus.

Das Einbetten des Fadens 7 in die Oberflächen 10a, 10b des Riemens 1 wird durch die oberflächlich zumindest im Nahtbereich 6 ausgebildete Polymerschicht 3 begünstigt, wobei die Polymerschicht 3 nicht zu hart sein sollte, damit der Faden 7 in diese eintauchen kann. Gleichzeitig darf die Polymerschicht 3 aber auch nicht zu weich sein, damit auf den Riemen 1 wirkende Kräfte nicht oder nur sehr gedämpft auf den Faden 7 übertragen werden und sich die Polymerschicht 3 im Betrieb auch nicht zu schnell abnutzt und den Faden 7 dadurch freilegt.

Die Einbettung des Fadens 7 in die Polymerschicht 3 im Nahtbereich 6 kann beispielsweise dadurch erreicht werden, dass beim Ausbilden der Naht 9 in einem Nähvorgang eine gewisse Fadenspannung aufgebracht wird, so dass der Faden 7 in den Übergangsbereichen 20 zwischen den Stichen 8 in das polymere Material der Polymerschicht 3 eingedrückt wird und dieses damit derartig verformt, dass sich eine Vertiefung mit der Eindringtiefe T ausbildet. Dies kann im Betrieb des Riemens 1 auch noch verstärkt werden, wenn eine Zugspannung auf den Riemen 1 wirkt, durch die auch die Fadenspannung des Fadens 7 steigt. Dadurch wird der Faden 7 unter Verformung der Polymerschicht 3 noch tiefer in das polymere Material gezogen; die Eindringtiefe T steigt somit, vorzugsweise bis der Faden 7 die querversteifenden Elemente 13, insbesondere die Corde 13b erreicht.

Der Faden 7 nähert sich damit immer mehr an die Gewebelage 2 oder die querversteifenden Elemente 13 an, ohne diese aber zu berühren, wodurch der Faden 7 noch besser geschützt werden kann. Da zwischen der Gewebelage 2 bzw. dem querversteifenden Element 13 und dem Faden 7 auch immer noch das elastische polymere Material vorhanden ist, kann im Betrieb des Riemens 1 auch eine gewisse Schockelastizität erzielt werden, da der Faden 7 bei ruckartiger Zugbelastung auf den Riemen 1 in das elastisch nachgiebige polymere Material gedrückt wird. Dadurch wird der Ruck auf den Faden 7 gedämpft, wodurch dieser vor einem Reißen geschützt wird.

Um das Eindringen in die Polymerschicht 3 weiter zu vereinfachen, kann vorgesehen sein, dass die Oberflächen 10a, 10b der Polymerschicht 3 zumindest im Nahtbereich 6 strukturiert sind bzw. eine gewisse Rauigkeit und demnach bereits kleine Unebenheiten aufweisen. Dabei ist es ausreichend, die Polymerschicht 3 lediglich im Nahtbereich 6 zu strukturieren. Dadurch kann der Faden 7 auch bereits mit einer geringeren Kraft bzw. einer geringeren Fadenspannung in die Polymerschicht 3 eintauchen, da die Vertiefung für den Faden 7 dann teilweise durch die bereits vorhandenen Unebenheiten mit ausgebildet wird. Ergänzend wird der Faden 7 im Betrieb des Riemens 1 bei gleicher Zugspannung auf den Riemen 1 nachträglich weniger stark in die Polymerschicht 3 gezogen als bei unstrukturierten Oberflächen 10a, 10b. Dadurch kann ein nachträgliches Lockern des Fadens 7 vermieden werden. Es kann grundsätzlich auch vorgesehen sein, die Vertiefung für den Faden 7 bereits vorab durch Einbringen eines entsprechenden Profils in die Oberflächen 10a, 10b auszubilden, entlang derer dann die Naht 9 ausgebildet wird.

Alternativ kann auch vorgesehen sein, den Faden 7 erst nach dem Vernähen endgültig in die Polymerschicht 3 einzubetten. Dazu kann beispielsweise vorgesehen sein, dass die jeweilige Decklage 3a, 3b der Polymerschicht 3 eines bereitgestellten Riemens 1 zumindest im jeweiligen Endbereich 1a, 1b bzw. im Nahtbereich 6 vor dem Vernähen teilweise abgetragen wird, vorzugsweise ohne die querversteifenden Elemente 13 freizulegen, und nach dem Vernähen der Endbereiche 1a, 1b eine unvernetzte Polymerschicht zumindest im Nahtbereich 6 wieder als Decklage 3a, 3b aufgelegt wird, so dass die Naht 9 vollständig davon abdeckt wird. Diese unvernetzte Polymerschicht wird nach dem Nähvorgang vernetzt bzw. vulkanisiert, so dass diese Bestandteil des Riemens 1 wird und die Gewebelage 2 somit bereichsweise mit einbettet und der Faden 7 darin ebenfalls eingebettet ist. Demnach ist der Faden 7 bei dieser Methode erst nach dem Vernähen in die Polymerschicht 3 des Riemens 1 eingebettet.

Durch die beschriebenen Methoden des Einbettens des Fadens 7 in die Polymerschicht 3 kann der Faden 7 also geschützt werden. Dadurch wird verhindert, dass sich der Faden 7 im dauerhaften Betrieb des Riemens 1 zu schnell abnutzt bzw. einzelne Bereiche des Fadens 7 durch die von den Rollen bzw. dem Erntegut bzw. der jeweiligen anliegenden anwendungsspezifischen Komponente ausgehenden Belastung, insbesondere Reibung, reißen und sich der endlose Riemen 1 im Bereich der Riemenverbindung durch die Belastung nach der Zeit wieder öffnet.

Statt lediglich einen eingebetteten Faden 7 zu verwenden, können auch zwei oder mehrere eingebettete Fäden 7 eingesetzt werden, die dann jeweils eine Naht 9 gemäß der obigen Beschreibung ausbilden.

Um im Betrieb eine hohe Zugfestigkeit des Riemens 1 auch mit dieser Riemenverbindung zu gewährleisten, ist jede Naht 9 derartig ausgeführt, dass der Faden 7 im Übergangsbereich 20 zwischen den Stichen 8 eine Richtungs-Komponente in bzw. parallel zur Längsrichtung L des endlosen Riemens 1 aufweist. Dies ist beispielsweise bei einer Naht 9 mit einem Zickzack-Verlauf oder einem wellenförmigen Verlauf oder einem Rechteck-Verlauf der Fall. Dadurch ist der Faden 7 in den Übergangsbereichen 20 zumindest anteilig in die Haupt-Belastungsrichtung des Riemens 1, vorzugsweise in eine Zugbelastungsrichtung, ausgerichtet, so dass ein Großteil der Zugkraft im Bereich der Riemenverbindung von dem darin eingebetteten Faden 7 abfangen werden kann. Dies kann dadurch noch verbessert werden, dass der Faden 7 beispielsweise an den Corden 13b als querversteifende Elemente 13 seitlich anliegt, wodurch die Zugfestigkeit weiter verbessert werden kann, da die Corde 13b selbst einen Teil der Zugbelastung auf die Fäden 7 aufnehmen können.

Das Zusammenwirken der Einbettung des Fadens 7 in die Polymerschicht 3, der anteiligen Ausrichtung des Fadens 7 bzw. der Naht 9 in die Längsrichtung L sowie dem optionalen Anliegen des Fadens 7 an den querversteifenden Elementen 13; 13b sorgen somit für eine besonders hohe Zugfestigkeit des Riemens 1 auch im Bereich der Riemenverbindung, die über eine lange Zeitdauer erhalten werden kann. Dazu kann insbesondere auch die Wahl des Gewebes in der Gewebelage 2 beitragen.

Die verstärkende Gewebelage 2 ist hierbei vorzugsweise als ein sogenanntes SZ-Gewebe aus verzwirnten Kettfäden 12a und Schussfäden 12b (s. Fig. 5) ausgeführt, wobei ein solches SZ-Gewebe beispielhaft in EP 0 213 219 A1 beschrieben ist. Ein derartiges SZ-Gewebe zeichnet sich dadurch aus, dass benachbarte jeweils verzwirnte Kettfäden 12a, die sich vorzugsweise in Längsrichtung L des Riemens 1 erstrecken, unterschiedliche Drehungsrichtungen der Verzwirnung aufweisen. Dadurch haben im Wesentlichen die halbe Anzahl der Kettfäden 12a die eine Drehungsrichtung, während die anderen, restlichen Kettfäden 12a die entgegengesetzte Drehungsrichtung aufweisen. Somit werden Kettfäden 12a benutzt, die bei ihrer Herstellung bzw. bei der Verzwirnung in unterschiedliche Richtungen verzwirnt werden, wobei für die Fäden zweckmäßigerweise gleichmäßige Drehungszahlen angewendet werden. Vorzugsweise können gegensätzlich verzwirnte Kettfäden 12a paarweise zusammengefasst werden und in Paaren von den Schussfäden 12b umfasst sein (in Fig. 5 nicht dargestellt), wodurch eine besonders günstige gegenseitige Ausgleichswirkung der benachbarten Kettfäden 12a eintreten kann, so dass bereits eine sehr hohe Zugfestigkeit des Riemens 1 gewährleistet werden kann. Weiterhin kann durch das SZ-Gewebe auch ein verbesserter Geradeauslauf des Riemens 1 gewährleistet werden.

Da der Faden 7 dieses SZ-Gewebe in mehreren Stichen 8 durchstößt, kann die Zugbelastung auf den Faden 7 auch effizient in die Gebewebelage 2 abgeführt werden, wodurch die Zugfestigkeit des Riemens 1 auch über die Riemenverbindung hochgehalten werden kann. Dabei ist allerdings darauf zu achten, dass die Gebewebelage 2 durch die Stiche 8 nicht zu stark perforiert wird, d.h. der Stichabstand nicht zu gering ist, vorzugsweise größer als 2mm, und die Stichdichte nicht zu hoch gewählt wird, da sich sonst die Zugfestigkeit des Riemens 1 insgesamt stark reduziert.

Ergänzend kann dieses SZ-Gewebe gemäß Fig. 5 in einer Doppeltuch-Struktur ausgebildet werden, wobei die Schussfäden 12b in dieser Doppeltuch-Struktur paarweise übereinanderliegend (in Durchstoßrichtung der Stiche 8) angeordnet sind und die Kettfäden 12a wie in Fig. 5 dargestellt mit den Schussfäden 12b verkreuzt sind. Dadurch kann die Dichte der verzwirnten Fäden und somit die Zugfestigkeit des Riemens 1 an sich erhöht werden. Bei einer Kombination dieser Doppeltuch-Struktur mit dem oben beschriebenen SZ-Gewebe wird jeder dargestellte Kettfaden 12a durch zwei parallel verlaufende und gegensätzlich verzwirnte Kettfäden 12a ersetzt.

Durch die Ausbildung mit paarweise übereinanderliegenden Schussfäden 12b (Doppeltuch) kann neben der hohen Zugfestigkeit aber auch eine besonders hohe Ausreißfestigkeit des Fadens 7 erreicht werden. Der Faden 7 durchstößt (Stich 8) die verkreuzten Kettfäden 12a und Schussfäden 12b einer Gewebelage 2 nämlich im Nahtbereich 6 an mehreren Stellen in Kreuzungspunkten 24 (Fig. 4). Der Faden 7 wird somit pro Gewebelage 2 beidseitig in einem gewissen Bereich von den Kettfäden 12a und den Schussfäden 12b eingespannt. Dadurch werden auf den Faden 7 wirkende Zugbelastungen noch besser in die Gewebelage 2 abgeleitet. Da der Faden 7 gemäß Fig. 4 im Überlappungsbereich 4 zwei Gewebelagen 2 (der beiden Endbereiche 1a, 1b) durchdringt, wird dieser Effekt noch verstärkt, so dass die Zugfestigkeit des gesamten Riemens 1 auch über die Riemenverbindung weiter verbessert werden kann.

Je nach Ausführung und Anwendungsbereich des Riemens 1 können eine Nahtlänge N des Nahtbereiches 6 und/oder eine Überlappungslänge Ü des Überlappungsbereiches 4 angepasst werden. Dabei kann auch vorgesehen sein, dass der Nahtbereich 6 größer ist als der Überlappungsbereich 4 und/oder zumindest einseitig über diesen hinausragt. Demnach verlaufen die Nähte 9 auch noch in einem kleinen Bereich neben den Riemenenden 11a, 11b des Riemens 1. Die Riemenenden 11a, 11b werden in dem Fall durch die Naht 9 an die Oberflächen 10a, 10b der Polymerschicht 3 gedrückt, so dass ein Umknicken der Endbereiche 1a, 1b ausgehend von den Riemenenden 11a, 11b vorteilhafterweise unterdrückt werden kann. Dadurch kann sich ein dauerhaft konstanter Lauf des Riemens 1 einstellen und ein Aufreißen der Riemenverbindung durch ein Umknicken der Endbereiche 1a, 1b kann vermieden bzw. hinausgezögert werden.

Ergänzend oder alternativ können auch eine oder mehrere Haltenähte 25 vorgesehen sein, die Fig. 4 angedeutet quer zur Längsrichtung L verlaufen und dazu dienen, die Riemenenden 11a, 11b anzudrücken sowie auch einen Teil der Zugkräfte aufzunehmen. Der Winkel der Haltenähte 25 gegenüber der Längsrichtung L liegt hierbei bei vorzugsweise zwischen 45° und 90°, vorzugsweise bei 60°.

### Bezugszeichenliste

- 1: Riemen
- 1a: erster Endbereich
- 1b: zweiter Endbereich
- 2: Gewebelage
- 3: Polymerschicht
- 3a: außen liegende Decklage der Polymerschicht 3
- 3b: innen liegende Decklage der Polymerschicht 3
- 4: Überlappungsbereich
- 5a, 5b: Stufe in den Endbereichen 1a, 1b
- 6: Nahtbereich
- 7: Faden
- 8: Stich
- 9: Naht
- 10a, 10b: Oberflächen der Polymerschicht 3
- 11a, 11b: Riemenenden
- 12a: Kettfaden
- 12b: Schussfaden
- 13: querversteifende Elemente
- 13a: Band
- 13b: Cord
- 14: Abschnitte
- 15: Seitenränder des Riemens 1
- 17: Überstand
- 20: Übergangsbereich
- 24: Kreuzungspunkt zwischen Stich 8 und Gewebelage 2
- 25: Haltenaht
- AA: Abschnitts-Abstand
- AE: Element-Abstand
- AR: Rand-Abstand
- BA: Abschnitts-Breite
- BE: Element-Breite
- BR: Riemen-Breite
- L: Längsrichtung
- LS: Längssteifigkeit
- N: Nahtlänge
- Q: Querrichtung
- QS: Quersteifigkeit
- TB: Teilbereich des Riemens 1
- TBm: mittlerer Teilbereich des Riemens 1
- TBr: randseitiger Teilbereich des Riemens 1a
- Ü: Überlappungslänge

## Patentansprüche

1. Riemen (1) als endloses Zugmittel für Förderbänder von Ballenpressen oder Ballenwicklern, mit mindestens einer Gewebelage (2), die zumindest bereichsweise in eine Polymerschicht (3) eingebettet ist, zum Ausbilden eines durch die mindestens eine Gewebelage (2) verstärkten endlosen Riemens (1),
**dadurch gekennzeichnet, dass**
in die Polymerschicht (3) querversteifende Elemente (13) eingebettet sind zum Erhöhen einer Quersteifigkeit (QS) des Riemens (1), wobei die querversteifenden Elemente (13) im Wesentlichen in eine Querrichtung (Q) des Riemens (1) ausgerichtet sind und der Riemen (1) zumindest im Bereich der querversteifenden Elemente (13) ein Steifigkeits-Verhältnis (QS/LS) zwischen der Quersteifigkeit (QS) und einer Längssteifigkeit (LS) von mindestens 2:1 aufweist.

2. Riemen (1) nach Anspruch 1, **dadurch gekennzeichnet, dass** die querversteifenden Elemente (13) in Längsrichtung (L) vollumlaufend oder abschnittsweise in einem Element-Abstand (AE) zueinander oder unmittelbar aneinanderliegend in der Polymerschicht (3) eingebettet sind, so dass die Quersteifigkeit (QS) des Riemens (1) kontinuierlich über den gesamten Riemen (1) oder abschnittsweise erhöht ist.

3. Riemen (1) nach Anspruch 2, **dadurch gekennzeichnet, dass** die querversteifenden Elemente (13) innerhalb mehrerer Abschnitte (14) in dem Element-Abstand (AE) zueinander oder unmittelbar aneinanderliegend in der Polymerschicht (3) angeordnet sind,
wobei ein Abschnitt (14) eine Abschnitts-Breite (BA) aufweist und benachbarte Abschnitte (14) in einem Abschnitts-Abstand (AA) zueinander angeordnet sind und zwischen den Abschnitten (14) keine querversteifenden Elemente (13) in der Polymerschicht (3) angeordnet sind,
wobei die Abschnitts-Breite (BA) und der Abschnitts-Abstand (AA) in einem Verhältnis von zwischen 1:6 und 1:2, vorzugsweise 1:3, zueinander liegen, wobei die Abschnitts-Breite (BA) vorzugsweise zwischen 50mm und 100mm, vorzugsweise 75mm, und der Abschnitts-Abstand (AA) zwischen 200mm und 300mm, vorzugsweise 250mm, beträgt.

4. Riemen (1) nach einem der vorhergehenden Ansprüche, **dadurch gekennzeichnet, dass** die querversteifenden Elemente (13)
- in die Querrichtung (Q) ausgerichtete Bänder (13a) sind, wobei die Bänder (13a) eine Element-Breite (BE) aufweisen und in einem Element-Abstand (AE) zueinander angeordnet sind, wobei die Element-Breite (BE) und der Element-Abstand (AE) der Bänder (13a) in einem Verhältnis von zwischen 1:12 und 1:35, vorzugsweise 1:15, zueinander liegen, wobei die Element-Breite (BE) vorzugsweise zwischen 10mm und 30mm, vorzugsweise 20mm, und der Element-Abstand (AE) zwischen 250mm und 350mm, insbesondere 300mm, beträgt, und/oder
- in die Querrichtung (Q) ausgerichtete Corde (13b) sind, wobei die Corde (13b) einen Durchmesser von zwischen 0,2mm und 2,5mm, vorzugsweise 1mm, aufweisen und die Corde (13b) aneinanderliegen oder beabstandet sind.

5. Riemen (1) nach einem der vorhergehenden Ansprüche, **dadurch gekennzeichnet, dass** das Steifigkeits-Verhältnis (QS/LS) zwischen der Quersteifigkeit (QS) und der Längssteifigkeit (LS) mindestens 3:1, vorzugsweise mindestens 5:1, insbesondere mindestens 10:1 beträgt.

6. Riemen (1) nach einem der vorhergehenden Ansprüche, **dadurch gekennzeichnet, dass** die querversteifenden Elemente (13) exakt in Querrichtung (Q) oder in einem Winkel zwischen +15° und -15°, vorzugsweise zwischen +5° und -5°, zur Querrichtung (Q) in der Polymerschicht (3) ausgerichtet sind.

7. Riemen (1) nach einem der vorhergehenden Ansprüche, **dadurch gekennzeichnet, dass** zwischen den querversteifenden Elementen (13) und Seitenrändern (15) des Riemens (1) ein Rand-Abstand (AR) von zwischen 2mm und 50mm vorgesehen ist.

8. Riemen (1) nach einem der vorhergehenden Ansprüche, **dadurch gekennzeichnet, dass** die querversteifenden Elemente (13) in Teilbereichen (TB) des Riemens (1) ausgespart sind, beispielsweise in einem mittleren Teilbereich (TBm) des Riemens (1).

9. Riemen (1) nach einem der vorhergehenden Ansprüche, **dadurch gekennzeichnet, dass** die querversteifenden Elemente (13) ein Elastizitätsmodul von mehr als 25kN/mm², insbesondere mehr als 35kN/mm², vorzugsweise mehr als 50kN/mm², aufweisen.

10. Riemen (1) nach einem der vorhergehenden Ansprüche, **dadurch gekennzeichnet, dass** die querversteifenden Elemente (13) aus Metall, z.B. aus Federstahl, oder aus faserverstärktem Kunststoff, z.B. mit Fasern aus Glas oder Kohle oder Aramid, oder aus textilen Fäden oder monofilen thermoplastischen Fäden gefertigt sind.

11. Riemen (1) nach einem der vorhergehenden Ansprüche, **dadurch gekennzeichnet, dass** Endbereiche (1a, 1b) des Riemens (1) mittelbar oder unmittelbar miteinander verbunden sind zum Ausbilden eines endlosen Riemens (1), wobei die Endbereiche (1a, 1b) des Riemens (1) dazu in einem Überlappungsbereich (4) flächig übereinanderliegen und zumindest bereichsweise in dem Überlappungsbereich (4) zusammengefügt sind, beispielsweise durch Vernähen, Verkleben, Verschrauben, Vernieten, Vulkanisieren, oder die Endbereiche (1a, 1b) durch ein Riemenschloss zusammengehalten sind.

12. Riemen (1) nach Anspruch 11, **dadurch gekennzeichnet, dass** die querversteifenden Elemente (13) in den Endbereichen (1a, 1b) ausgespart sind.

13. Riemen (1) nach Anspruch 11 oder 12, **dadurch gekennzeichnet, dass** die Endbereiche (1a, 1b) durch mindestens einen eine Naht (9) ausbildenden Faden (7) miteinander verbunden sind, wobei der mindestens eine Faden (7) die Endbereiche (1a, 1b) des Riemens (1) dazu in einem Nahtbereich (6) in mehreren Stichen (8) durchdringt, wobei die mindestens eine Gebewebelage (2) des Riemens (1) zumindest über diesen Nahtbereich (6) in die Polymerschicht (3) eingebettet ist, und der Faden (7) in Übergangsbereichen (20) zwischen den Stichen (8) in die Polymerschicht (3) derartig oberflächlich in einer Eindringtiefe (T) eingebettet ist, dass der Faden (7) vollständig oder zumindest größtenteils unterhalb von Oberflächen (10a, 10b) des Riemens (1) verläuft.

14. Riemen (1) nach einem der Ansprüche 11 bis 13, **dadurch gekennzeichnet, dass** ein Großteil der Übergangsbereiche (20) zwischen den Stichen (8) eine Richtungs-Komponente aufweist, die parallel zu einer Längsrichtung (L) des Riemens (1) ausgerichtet ist und/oder zusätzlich mindestens eine Haltenaht (25) vorgesehen ist, die im Nahtbereich (6) im Wesentlichen quer zu einer Längsrichtung (L) des Riemens (1) verläuft.

15. Riemen (1) nach einem der Ansprüche 11 bis 14, **dadurch gekennzeichnet, dass** der Nahtbereich (6) über den Überlappungsbereich (4) zumindest einseitig hinausgeht, so dass auch Stiche (8) und Übergangsbereiche (20) des Fadens (7) außerhalb des Überlappungsbereiches (4) angeordnet sind zum Andrücken von Riemenenden (11a, 11b) des Riemens (1) an die Oberfläche (10a, 10b) des Riemens (1).

## Claims

1. Belt (1) as a continuous traction means for conveyor belts of bale presses or bale wrappers, comprising at least one fabric layer (2) embedded at least in certain regions in a polymer layer (3), for creating a continuous belt (1) reinforced by at least one fabric layer (2),
**characterised in that**
cross-stiffening elements (13) are embedded in the polymer layer (3), for increasing a transverse rigidity (QS) of the belt (1), whereby the cross-stiffening elements (13) are essentially oriented in a transverse direction (Q) of the belt (1), and the belt (1) exhibits, at least in the region of the cross-stiffening elements (13), a ratio of rigidity (QS/LS) between the transverse rigidity (QS) and a longitudinal rigidity (LS) of at least 2:1.

2. Belt (1) according to claim 1, **characterised in that** the cross-stiffening elements (13) are embedded in the polymer layer (3) in the longitudinal direction (L) fully circumferentially, or in segments at an element distance (AE) with respect to one another, or immediately in contact with one another so that the transverse rigidity (QS) of the belt (1) is increased continuously across the entire belt (1) or segment by segment.

3. Belt (1) according to claim 2, **characterised in that** the cross-stiffening elements (13) are arranged in the polymer layer (3) within several segments (14) at the element distance (AE) with respect to one another, or immediately in contact with one another,
a segment (14) exhibiting a segment width (BA), and adjacent segments (14) being arranged at a segment distance (AA) with respect to one another, and no cross-stiffening elements (13) being arranged between the segments (14) in the polymer layer (3),
said segment width (BA) and said segment distance (AA) having a ratio with respect to one another of between 1:6 and 1:2, preferably 1:3, said segment width (BA) preferably being between 50mm and 100mm, preferably 75mm, and said segment distance (AA) being between 200mm and 300mm, preferably 250mm.

4. Belt (1) according to one of the above claims, **characterised in that** the cross-stiffening elements (13)
- are bands (13a) oriented in the transverse direction (Q), said bands (13a) having an element width (BE) and being arranged at an element distance (AE) with respect to one another, said element width (BE) and said element distance (AE) of the bands (13a) having a ratio with respect to one another of between 1:12 and 1:35, preferably 1:15, said element width (BE) preferably being between 10mm and 30mm, preferably being between 20mm, and said element distance (AE) being between 250mm and 350mm, in particular 300mm, and/or
- cords (13b) oriented in the transverse direction (Q), said cords (13b) having a diameter of between 0.2mm and 2.5mm, preferably 1mm, and said cords (13b) lying in contact with one another or being spaced apart.

5. Belt (1) according to one of the above claims, **characterised in that** the rigidity ratio (QS/LS) between the transverse rigidity (QS) and the longitudinal rigidity (LS) is at least 3:1, preferably at least 5:1, in particular at least 10:1.

6. Belt (1) according to one of the above claims, **characterised in that** the cross-stiffening elements (13) are oriented in the polymer layer (3) exactly in the transverse direction (Q) or at an angle of between +15° and -15°, preferably between +5° and -5°, with respect to the transverse direction (Q).

7. Belt (1) according to one of the above claims, **characterised in that** an edge distance (AR) of between 2mm and 50mm is provided between the cross-stiffening elements (13) and the lateral margins (15) of the belt (1).

8. Belt (1) according to one of the above claims, **characterised in that** the cross-stiffening elements (13) are omitted in partial regions (TB) of the belt (1), for example, in a middle partial region (TBm) of the belt (1).

9. Belt (1) according to one of the above claims, **characterised in that** the cross-stiffening elements (13) exhibit a modulus of elasticity of more than 25kN/mm², in particular, more than 35kN/mm², preferably more than 50kN/mm².

10. Belt (1) according to one of the above claims, **characterised in that** the cross-stiffening elements (13) are made of metal, e.g. of spring steel, or of fibre-reinforced plastics, e.g. with fibres of glass or carbon or aramid, or of textile fibres, or monofilament thermoplastic yarns.

11. Belt (1) according to one of the above claims, **characterised in that** end regions (1a, 1b) of the belt (1) are directly or indirectly connected to one another for creating a continuous belt (1), where, to that end, said end regions (1a, 1b) of the belt (1) lie flat upon one another in an overlap region (4) and are joint together at least in certain sections in the overlap region (4), for example, by means of sewing, adhesive bonding, screwing, riveting, vulcanizing, or the end regions (1a, 1b) are held together by means of a belt joint.

12. Belt (1) according to claim 11, **characterised in that** the cross-stiffening elements (13) are omitted in the end regions (1a, 1b).

13. Belt (1) according to claim 11 or 12, **characterised in that** the end regions (1a, 1b) are connected to one another by at least one thread (7) creating a seam (9), where, to that end, said at least one thread (7) penetrates the end regions (1a, 1b) of the belt (1) in a seam region (6) in several stitches (8), where said at least one fabric layer (2) of the belt (1) is embedded in the polymer layer (3) at least across said seam region (6), and said thread (7) is embedded in the polymer layer (3) in transition regions (20) between the stitches (8) close to the surface at a depth of penetration (T) in such a way that the thread (7) runs completely or at least mostly below surfaces (10a, 10b) of the belt (1).

14. Belt (1) according to one of the claims 11 through 13, **characterised in that** a majority of the transition regions (20) between the stitches (8) comprise a direction component, which is oriented parallel to a longitudinal direction (L) of the belt (1), and/or in addition at least one assembly seam (25) is provided, extending in the seam region (6) essentially transverse to a longitudinal direction (L) of the belt (1).

15. Belt (1) according to one of the claims 11 through 14, **characterised in that** the seam region (6) goes beyond the overlap region (4) at least on one side so that stitches (8) and transition regions (20) of the thread (7) are also located outside the overlap region (4) for pressing-on belt ends (11a, 11b) of the belt (1) to the surface (10a, 10b) of the belt (1).

## Revendications

1. Courroie (1) servant de moyen de traction sans fin pour des bandes transporteuses de presses à balles ou des enrubanneuses, avec au moins une couche tissée (2) qui est noyée au moins par zones dans une couche polymère (3) pour former une courroie sans fin (1) renforcée par l'au moins une couche tissée (2),
**caractérisée en ce que**
des éléments de renfort transversal (13) sont noyés dans la couche polymère (3) pour augmenter la rigidité transversale (QS) de la courroie (1), les éléments de renfort transversal (13) étant orientés sensiblement dans un sens transversal (Q) de la courroie (1) et la courroie (1) présentant au moins dans la zone des éléments de renfort (13) un rapport de rigidité (QS/LS) entre la rigidité transversale (QS) et une rigidité longitudinale (LS) d'au moins 2:1.

2. Courroie (1) suivant la revendication 1, **caractérisée en ce que** les éléments de renfort transversal (13) sont noyés dans la couche polymère (3) sur toute la circonférence dans le sens longitudinal (L) ou par tronçons avec un écart (AE) des éléments les uns par rapport aux autres ou disposés directement de manière jointive, de sorte que la rigidité transversale (QS) de la courroie est augmentée continuellement sur l'ensemble de celle-ci ou par tronçons.

3. Courroie (1) suivant la revendication 2, **caractérisée en ce que** les éléments de renfort transversal (13) sont disposés à l'intérieur de plusieurs sections (14) avec l'écart (AE) des éléments les uns par rapport aux autres ou disposés de manière jointive dans la couche polymère (3),
une section (14) présentant une largeur de section (BA) et des sections voisines (14) étant disposées avec un écart (AA) des sections les unes par rapport aux autres et aucun élément de renfort transversal (13) n'étant disposé entre les sections (14), la largeur de section (BA) et l'écart entre sections (AA) se situant dans un rapport entre 1:6 et 1:2, de préférence de 1:3 l'un par rapport à l'autre, la largeur de section (BA) se situant entre 50mm et 100mm, de préférence à 75mm, et l'écart entre sections (AA) entre 200mm et 300mm, de préférence 250mm.

4. Courroie (1) suivant une des revendications précédentes, **caractérisée en ce que** les éléments de renfort transversal (13) sont
- des bandes (13a) orientées dans le sens transversal (Q), les bandes (13a) présentant une largeur d'élément (BE) et étant disposées avec un écart (AE) des éléments les uns par rapport aux autres, la largeur d'élément (BE) et l'écart entre éléments (AE) des bandes (13a) se situant dans un rapport entre 1:12 et 1:35, de préférence de 1:15 l'un par rapport à l'autre, la largeur d'élément (BE) se situant de préférence entre 10mm et 30mm, de préférence à 20mm et l'écart entre éléments (AE) entre 250mm et 350mm, en particulier à 300mm, et/ou
- des cordes (13b) orientées dans le sens transversal (Q), les cordes (13b) présentant un diamètre de 0,2mm à 2,5mm, de préférence de 1mm et les cordes (13b) étant disposées de manière jointive ou avec un écart entre elles.

5. Courroie (1) suivant une des revendications précédentes, **caractérisée en ce que** le rapport de rigidité (QS/LS) entre la rigidité transversale (QS) et la rigidité longitudinale (LS) est au moins de 3:1, de préférence au moins de 5:1, en particulier au moins de 10:1.

6. Courroie (1) suivant une des revendications précédentes, **caractérisée en ce que** les éléments de renfort transversal (13) sont orientés exactement dans le sens transversal (Q) ou de manière à former un angle compris entre +15° et -15°, de préférence entre +5° et -5° par rapport au sens transversal (Q) dans la couche polymère (3).

7. Courroie (1) suivant une des revendications précédentes, **caractérisée en ce qu'**entre les éléments de renfort transversal (13) et les bords latéraux (15) de la courroie (1) est prévu un écart (AR) par rapport au bord entre 2mm et 50mm.

8. Courroie (1) suivant une des revendications précédentes, **caractérisée en ce que** les éléments de renfort transversal (13) sont évités dans des zones partielles (TB) de la courroie (1), par exemple dans une zone centrale (TBm) de la courroie (1).

9. Courroie (1) suivant une des revendications précédentes, **caractérisée en ce que** les éléments de renfort transversal (13) présentent un module d'élasticité de plus de 25kN/mm², en particulier de plus de 35kN/mm², de préférence de plus de 50kN/mm².

10. Courroie (1) suivant une des revendications précédentes, **caractérisée en ce que** les éléments de renfort transversal (13) sont fabriqués en métal, par exemple en acier à ressort ou en matière artificielle renforcée par des fibres, par exemple par des fibres de verre ou des fibres de carbone ou des fibres d'aramide, ou en fils textiles ou en fils monofilaments thermoplastiques.

11. Courroie (1) suivant une des revendications précédentes, **caractérisée en ce que** les parties terminales (1a, 1b) de la courroie (1) sont reliées directement ou indirectement l'une à l'autre pour former une courroie sans fin (1), à cet effet, les parties terminales (1a, 1b) de la courroie (1) étant placées à plat l'une sur l'autre dans une zone de chevauchement (4) et assemblées au moins par zones dans la zone de chevauchement (4), par exemple par couture, collage, vissage, vulcanisation ou les parties terminales (1a, 1b) étant maintenues ensemble à l'aide d'une jonction de courroie.

12. Courroie (1) suivant la revendication 11, **caractérisée en ce que** les éléments de renfort transversal (13) sont évités dans les parties terminales (1a, 1b).

13. Courroie (1) suivant la revendication 11 ou 12, **caractérisée en ce que** les parties terminales (1a, 1b) sont reliées l'une à l'autre par un fil (7) formant une couture (9), à cet effet, l'au moins un fil (7) pénétrant en plusieurs points les parties terminales (1a, 1b) de la courroie (1) dans une zone de couture (6), l'au moins une couche tissée (2) de la courroie (1) étant noyée dans la couche polymère (3) au moins sur cette zone de couture (6) et le fil (7) étant, dans les zones de transition (20) entre les points (8), noyée en superficie à une profondeur de pénétration (T) dans la couche polymère (3), de sorte que le fil (7) s'étend entièrement ou au moins en grande partie au-dessous de surfaces (10a, 10b) de la courroie (1).

14. Courroie (1) suivant une des revendications 11 à 13, **caractérisée en ce qu'**une grande partie des zones de transition (20) entre les points (8) présente une composante directionnelle qui est orientée de manière parallèle à un sens longitudinal (L) de la courroie (1) et/ou au moins une couture de maintien (25) est prévue en plus qui s'étend sensiblement transversalement à un sens longitudinal (L) de la courroie (1) dans la zone de couture (6).

15. Courroie (1) suivant une des revendications 11 à 14, **caractérisée en ce que** la zone de couture (6) s'étend au-delà de la zone de chevauchement (4) au moins d'un côté, de sorte que des points (8) et des zones de transition (20) du fil (7) sont également disposés en dehors de la zone de chevauchement (4) pour le placage d'extrémités (11a, 11b) de la courroie (1) contre la surface (10a, 10b) de la courroie (1).
